# EUROPEAN PATENT APPLICATION

(11) **EP 1 371 882 A2**
(43) Date of publication of application: **17.12.2003**
(21) Application number: 03013244.3
(22) Date of filing: 12.06.2003
(51) Int. Cl.: F16H 61/04

(54) **Gear-shift control apparatus for automatic transmission and gear-shift control method**

(30) Priority: 13.06.2002 JP 2002172590
(71) Applicant: TOYOTA JIDOSHA KABUSHIKI KAISHA, Aichi-ken 471-8571 (JP); AISIN AW CO., LTD., Anjo-shi, Aichi-ken 444-1192 (JP)
(72) Inventor: Takebayashi, Noritaka, Toyota-shi, Aichi-ken, 471-8571 (JP); Takanami, Yoji, Toyota-shi, Aichi-ken, 471-8571 (JP); Kobiki, Yasushi, Toyota-shi, Aichi-ken, 471-8571 (JP); Ando, Masahiko, Anjo-shi, Aichi-ken, 444-1192 (JP)
(74) Representative: Leson, Thomas Johannes Alois, Dipl.-Ing.

(57) **Abstract**

If oil temperature is equal to or higher than a predetermined temperature and if accelerator opening change rate is equal to or higher than a predetermined change rate upon detection of a downshift instruction (YES in S302), an ECT-ECU sets modes corresponding to conditions for determination period calculation processings (S400), hydraulic-pressure temporal change rate calculation processings (S500), and torque adjustment amount calculation processings (S600), respectively. By performing downshift (S310) on the basis of a determination period, a hydraulic-pressure temporal change rate, and a torque adjustment amount corresponding to a set mode, the ECT-ECU improves gear-shift responsive characteristics and restrains the occurrence of a gear-shift shock.

## Description

### BACKGROUND OF THE INVENTION

### 1. Field of the Invention

The invention relates to an art for controlling an automatic transmission installed in a vehicle and, more particularly, to an art for adjusting gear-shift responsive characteristics and restraining the occurrence of a gear-shift shock.

### 2. Description of the Related Art

In general, an automatic transmission installed in a vehicle makes a gear shift on the basis of an acceleration request that is made by a driver so as to accelerate the vehicle, a running state of the vehicle, an operational state of the automatic transmission, or the like. For example, if the driver deeply depresses an accelerator, a gear-shift stage is calculated on the basis of a depression stroke of the accelerator, a throttle opening, a vehicle speed, and the like. The automatic transmission then shifts a gear-shift stage to the calculated gear-shift stage.

A gear shift for switching the current gear-shift stage to a lower gear-shift stage, namely, a downshift is classified into two types. In one of them (hereinafter referred to as a "deceleration downshift"), the automatic transmission shifts to a lower gear-shift stage as the vehicle decelerates. In the other (hereinafter referred to as a "kick-down shift"), the automatic transmission temporarily shifts to a lower gear-shift stage so as to accelerate the vehicle. The control characteristics required of the automatic transmission during a deceleration downshift are different from the control characteristics required of the automatic transmission during a kick-down shift. Namely, in the case of a deceleration downshift, a gear-shift shock is hardly tolerable. On the other hand, in the case of a kick-down shift, while more importance is placed on gear-shift responsive characteristics, a gear-shift shock of a certain degree or less is tolerated.

In order to control the automatic transmission in response to a gear-shift request as described above, a control apparatus that controls a gear shift of making a downshift by one stage from the first gear-shift stage to the second gear-shift stage by performing duty control of hydraulic control valves included in an automatic transmission of a vehicle is disclosed, for example, in Japanese Patent Application No. 9-217826. This control apparatus includes a sensing circuit, a discriminant circuit, and a control circuit. If a request for abrupt acceleration has been made, the sensing circuit senses a throttle opening amount immediately before an accelerating operation, a vehicle speed, and a change amount in throttle opening immediately after the accelerating operation. The discriminant circuit makes a discrimination on the state of the vehicle by comparing the throttle opening amount thus sensed, the vehicle speed thus sensed, and the change amount in throttle opening thus sensed with predetermined reference values respectively. The control circuit performs a plurality of duty controls in response to temporal changes.

If the throttle opening amount, the vehicle speed, and the change amount in throttle opening are equal to or smaller than predetermined values respectively, namely, if it is determined on the basis of sensed data that a driver has not requested abrupt acceleration, this gear-shift control apparatus performs a gear shift (downshift) that places importance on the restraint of a gear-shift shock. At this moment, two or more signals are output to hydraulic control valves. Thus, gear-shift operations are processed in response to the signals respectively. As a result, the occurrence of a shock during a gear shift is restrained.

On the other hand, if one of the throttle opening amount, the vehicle speed, and the change amount in throttle opening is equal to or larger than a corresponding one of the predetermined values, namely, if it is determined on the basis of these data that the driver has made a request for abrupt acceleration, the gear-shift control apparatus makes a gear shift that places importance on gear-shift responsive characteristics. At this moment, a signal is output to the hydraulic control valves. Thus, a gear shift from the first gear-shift stage to the second gear-shift stage is quickly made. As a result, gear-shift responsive characteristics are ensured in response to the driver's request for abrupt acceleration.

Thus, the gear-shift control apparatus disclosed in the aforementioned publication controls deceleration to a gear-shift stage that is lower than the current gear-shift stage by one stage. If a so-called "multiple gear shift" is made with two or more gear-shift instructions being detected within a predetermined period, the operation controlled by the aforementioned control apparatus is repeatedly performed a number of times equal to the number of gear-stages by which the transmission shifts. In this manner, the multiple gear shift is made possible.

Recent automatic transmissions are equipped with multi-staged gear-shift stages so as to improve fuel consumption, operability referred to as driveability, and the like. Therefore, in addition to a normal gear-shift pattern of making a gear shift by one stage each time, the number of opportunities to make a gear shift to a gear-shift stage that is higher or lower than the current gear-shift stage by two or more stages, namely, to make a multiple gear shift is increased. This multiple gear shift is made, for example, if an accelerator has been deeply depressed all of a sudden or if the shift position selected through a shift operation performed by the driver is higher or lower than the current gear-shift stage by two or more stages.

However, the control apparatus disclosed in the aforementioned publication controls hydraulic pressures in the automatic transmission on the premise that deceleration to a gear-shift stage that is higher or lower than the current gear-shift stage by one stage is to be performed. Therefore, if a multiple gear shift is detected in this control apparatus, twice as much time as in the case of a one-stage gear shift is required in principle. In some cases, therefore, sufficient gear-shift responsive characteristics are not ensured when a multiple gear-shift instruction is issued.

For example, if a gear-shift instruction from the fifth-speed range to the third-speed range, a gear shift from the fifth-speed range to the fourth-speed range is made in the first gear-shift processing, and a gear shift from the fourth-speed range to the third-speed range is made in the subsequent gear-shift processing. In this case, after the gear shift to the fourth-speed range has been confirmed, the gear shift to the third-speed range is started. In this case, the period elapsing from the completion of the gear shift to the fourth-speed range to the issuance of an instruction signal for starting the gear shift from the fourth-speed range to the third-speed range is equal to the period elapsing to the confirmation of the completion of a gear shift from the fourth-speed range to the third-speed range in the case where the gear shift is made on the basis of a normal gear-shift instruction that is different from a multiple gear-shift instruction.

In this case, with a view to improving responsive characteristics of the multiple gear shift, a method of making a gear shift (hereinafter referred to as the "first gear shift") from the first gear-shift stage (e.g., the fifth-speed range) to the second gear-shift stage (e.g., the fourth-speed range) within a shorter period than usual and then making a gear shift (hereinafter referred to as the "second gear shift") from the second gear-shift stage (the fourth-speed range) to the third gear-shift stage (e.g., the third-speed range) is contemplable. In this case, gear-shift processings such as those of engaging friction engagement elements are completed earlier than usual so as to complete the first gear shift earlier than usual. However, if the friction engagement elements are engaged within a short period, the output torque from the automatic transmission fluctuates within a short period as well. This makes the occurrence of a gear-shift shock more likely.

### SUMMARY OF THE INVENTION

It is an object of the invention to provide a gear-shift control apparatus and a gear-shift control method capable of adjusting gear-shift responsive characteristics and restraining the occurrence of a gear-shift shock in response to information regarding an automatic transmission.

A gear-shift control apparatus in accordance with a first aspect of the invention includes detection means, first condition calculation means, period calculation means, determination means, and set means. The detection means detects information regarding the automatic transmission. The first condition calculation means calculates an engagement processing condition if the information satisfies a predetermined condition. The period calculation means calculates a criterion period from a timing when the gear-shift stage is established to a timing when it is determined that a gear shift has been completed if the information satisfies the predetermined condition. The determination means determines that a processing based on the instruction has been completed if a predetermined reference period elapses after establishment of the gear-shift stage. The set means sets the criterion period as the reference period.

This gear-shift control apparatus controls an automatic transmission installed in a vehicle. The detection means of this gear-shift control apparatus detects or estimates information regarding the automatic transmission (e.g., gear-shift instructions, the input and output speeds of the automatic transmission, the temperature of working fluid, the torque of an input shaft, and the like). If the information regarding the automatic transmission satisfies a predetermined condition (e.g., if gear-shift responsive characteristics are to be improved with a multiple gear-shift instruction having been issued or if the gear-shift operation is quickly performed with a sufficiently high temperature of working fluid and with good responsive characteristics of hydraulic pressure), the first condition calculation means calculates an engagement processing condition. This engagement processing condition is a condition relating to a processing that is performed after a hydraulic-pressure command value for engaging a first friction engagement element is output on the basis of an instruction to the automatic transmission and before a gear-shift stage based on the instruction is established (e.g., a condition relating to the temporal change rate of hydraulic pressure for engaging a friction engagement element, a condition relating to the period for engaging a friction engagement element, or the like). In this case, the period calculation means calculates a criterion period. This criterion period starts when the gear-shift stage based on the instruction is established, and ends when it is determined that the gear shift has been completed. The set means sets the criterion period as a predetermined reference period. If the reference period elapses after a hydraulic-pressure command value for engaging the first friction engagement element is output, the determination means determines that a processing based on the instruction (e.g., an engaging processing) has been completed. Namely, if gear-shift responsive characteristics are required in respect of the automatic transmission, the first condition calculation means calculates an engaging processing condition satisfying such a requirement (e.g., a condition that the first friction engagement element be engaged on the basis of a change rate that is higher than a preset hydraulic-pressure,temporal change rate set in advance, or the like). The period calculation means calculates a criterion period that is shorter than a preset reference period. If the criterion period elapses, the determination means determines that the processing based on the instruction has been completed. Therefore, the automatic transmission makes a gear shift more quickly than in the case where there is no need to ensure gear-shift responsive characteristics. On the other hand, if restraint of the occurrence of a gear-shift shock is required in respect of the automatic transmission, the first condition calculation means calculates an engagement processing condition satisfying the requirement (e.g., a condition that the first friction engagement element be engaged on the basis of a preset temporal change rate in hydraulic pressure, or the like). The period calculation means calculates a determination period that is longer than a preset reference period. Accordingly, the automatic transmission gently makes a gear shift so as to restrain the occurrence of a gear-shift shock. Thus, the automatic transmission can perform a gear-shift processing of adjusting gear-shift responsive characteristics and a gear-shift processing of restraining the occurrence of a gear-shift shock in response to information regarding the automatic transmission. As a result, it is possible to provide a gear-shift control apparatus capable of adjusting gear-shift responsive characteristics and restraining the occurrence of a gear-shift shock in response to information regarding the automatic transmission.

In the gear-shift control apparatus of the first aspect, the detection means may include means for detecting a gear-shift instruction to the automatic transmission. The first condition calculation means may include means for calculating a temporal change rate in the first hydraulic pressure such that the temporal change rate becomes higher than a first preset change rate if two or more gear-shift instructions are detected within a predetermined period.

In this case, the engagement processing condition relates to a temporal change rate in a first hydraulic pressure that is supplied to the first friction engagement element so as to engage the first friction engagement element. If two or more gear-shift instructions (e.g., fifth-speed range → fourth-speed range → third-speed range) are detected within a predetermined period, the first condition calculation means calculates a temporal change rate in the first hydraulic pressure such that the temporal change rate becomes higher than a first preset change rate. Thus, the first friction engagement element is engaged more quickly in comparison with a case where a single gear-shift instruction has been detected. As a result, the gear-shift control apparatus can adjust gear-shift responsive characteristics in response to information regarding the automatic transmission.

In the gear-shift control apparatus of the first aspect, the detection means may include means for detecting an input speed of the automatic transmission and means for detecting a gear-shift instruction to the automatic transmission. The first condition calculation means may include means for calculating a temporal change rate in the first hydraulic pressure such that the temporal change rate becomes higher than a first preset change rate if the input speed satisfies a predetermined condition with two or more gear-shift instructions having been detected within a predetermined period.

In this case, the engagement processing condition relates to a temporal change rate in the first hydraulic pressure that is supplied to the first friction engagement element so as to engage the first friction engagement element. If the input speed satisfies a predetermined condition with two or more gear-shift instructions having been detected within a predetermined period (e.g., when the input speed is a speed prior to the start of an inertia phase of the automatic transmission or when the temporal change rate in input speed is within a predetermined range), the first condition calculation means calculates a temporal change rate in the first hydraulic pressure such that the temporal change rate becomes higher than the first preset change rate. The inertia phase is a certain state of the automatic transmission. If the inertia phase begins, the input speed of the automatic transmission starts changing, and it becomes difficult to switch control parameters for gear-shift processings. Thus, if an engagement processing condition (i.e., a condition relating to the temporal change rate in the first hydraulic pressure) is calculated after the input speed has been confirmed (e.g., after it is confirmed on the basis of the input speed that the inertia phase has not begun), the automatic transmission makes a gear shift more quickly in comparison with a case where two or more gear-shift instructions are not detected. Thus, the gear-shift control apparatus can adjust gear-shift responsive characteristics in response to information regarding the automatic transmission.

In the gear-shift control apparatus of the first aspect, the detection means may include means for detecting a gear-shift instruction to the automatic transmission. The period calculation means may include means for calculating the criterion period such that the criterion period becomes shorter than a preset reference period if two or more gear-shift instructions are detected within a predetermined period.

In this case, if two or more gear-shift instructions are detected within a predetermined period, the period calculation means calculates a criterion period such that the criterion period becomes shorter than a preset reference period. Accordingly, if two or more gear-shift instructions are detected within the predetermined period, the period for confirming completion of a gear-shift processing based on the first gear-shift instruction is shortened, and a gear-shift processing based on the subsequent gear-shift instruction is started early. Thus, the gear-shift control apparatus can adjust gear-shift responsive characteristics in response to information regarding the automatic transmission.

In the gear-shift control apparatus of the first aspect, the detection means may include means for detecting a gear-shift instruction to the automatic transmission and means for detecting an input speed of the automatic transmission. The period calculation means may include means for calculating the criterion period such that the criterion period becomes shorter than a preset reference period if the input speed satisfies a predetermined condition with two or more gear-shift instructions having been detected within a predetermined period.

In this case, if the input speed satisfies the predetermined condition with two or more gear-shift instructions having been detected within the predetermined period (e.g., when the input speed is a speed prior to the start of an inertia phase of the automatic transmission, when the temporal change rate in input speed is within a predetermined range, or the like), the period calculation means calculates a criterion period such that the criterion period becomes shorter than a preset reference period. By setting the criterion period short before the inertia phase begins, the period required for confirmation of completion of a gear-shift processing can be reduced. As a result, the period that elapses until a subsequent gear shift is started is reduced. This makes it possible to improve gear-shift responsive characteristics.

The gear-shift control apparatus of the first aspect may further include second condition calculation means for calculating a release processing condition if the information satisfies the predetermined condition.

In this case, the second condition calculation means calculates a release processing condition. This release processing condition relates to a processing that is performed after an instruction is output to the automatic transmission and before the second friction engagement element is released. Namely, if gear-shift responsive characteristics are required in respect of the automatic transmission, the second condition calculation means calculates a release processing condition satisfying the requirement (e.g., a condition that the second friction engagement element be released on the basis of a change rate that is higher than a preset temporal change rate in hydraulic pressure, or the like). In this case, the automatic transmission makes a gear shift earlier in comparison with a case where gear-shift responsive characteristics are not required. On the other hand, if restraint of the occurrence of a gear-shift shock is required in respect of the automatic transmission, the second condition calculation means calculates a release processing condition satisfying the requirement (e.g., a condition that the second friction engagement element be engaged on the basis of a change rate that is lower than a preset temporal change rate in hydraulic pressure, or the like). In this case, the automatic transmission makes a gear shift more gently in comparison with a case where restraint of a gear-shift shock is not required. This makes it possible to adjust gear-shift responsive characteristics and to restrain the occurrence of a gear-shift shock in response to information regarding the automatic transmission.

In the gear-shift control apparatus of the first aspect, the detection means may include means for detecting a gear-shift instruction to the automatic transmission. The first condition calculation means may include means for calculating a temporal change rate in the first hydraulic pressure such that the temporal change rate becomes higher than a first preset change rate if two or more gear-shift instructions are detected within a predetermined period. The second condition calculation means may include means for calculating a temporal change rate in the second hydraulic pressure such that the temporal change rate becomes higher than a second preset change rate if two or more gear-shift instructions are detected within a predetermined period.

In this case, the engagement processing condition relates to a temporal change rate in the first hydraulic pressure that is supplied to the first friction engagement element so as to engage the first friction engagement element. The release processing condition relates to a temporal change rate in the second hydraulic pressure that is supplied to the second friction engagement element so as to release the second friction engagement element. If two or more gear-shift instructions are detected within a predetermined period, the first condition calculation means calculates a temporal change rate in the first hydraulic pressure such that the temporal change rate becomes higher than a first preset change rate. The second condition calculation means calculates a temporal change rate in the second hydraulic pressure such that the temporal change rate becomes higher than a second preset change rate. Namely, the second friction engagement element is quickly released, and the first friction engagement element is quickly engaged. Thus, the gear-shift control apparatus can adjust gear-shift responsive characteristics in response to information regarding the automatic transmission.

A gear-shift control apparatus in accordance with a second aspect of the invention includes detection means for detecting information regarding the automatic transmission, condition calculation means for calculating an engagement processing condition if the information satisfies a predetermined condition, and first output means for outputting a first instruction for adjusting the input torque on the basis of a first adjustment amount calculated in advance if the information satisfies the predetermined condition.

This gear-shift control apparatus controls an automatic transmission installed in a vehicle. Input torque of the automatic transmission is controlled by torque control means of a power source (e.g., an engine) of the vehicle. The detection means of this gear-shift control apparatus detects or estimates information regarding the automatic transmission (e.g., gear-shift instructions, the input and output speeds of the automatic transmission, the temperature of working fluid, the torque of an input shaft, and the like). If the information satisfies a predetermined condition (e.g., if two or more gear-shift instructions are detected within a predetermined period), the condition calculation means calculates an engagement processing condition. This engagement processing condition relates to a processing that is performed after a hydraulic-pressure command value for engaging a friction engagement element on the basis of an instruction to the automatic transmission is output and before a gear-shift stage based on the instruction is established. The first output means outputs a first instruction for adjusting input torque on the basis of a first adjustment amount calculated in advance. If the first instruction is output, output torque of the power source is adjusted by the torque control means, and the adjusted torque is input to the automatic transmission. This makes it possible to restrain the occurrence of a shock resulting from establishment of a certain gear-shift stage of the automatic transmission. As a result, it is possible to provide a gear-shift control apparatus capable of restraining the occurrence of a gear-shift shock in response to information regarding the automatic transmission.

In the gear-shift control apparatus of the second aspect, the detection means may include means for detecting a gear-shift instruction to the automatic transmission. The condition calculation means may include means for calculating a temporal change rate in the hydraulic pressure such that the temporal change rate becomes higher than a preset change rate if two or more gear-shift instructions are detected within a predetermined period. The first output means may include means for outputting the first instruction if two or more gear-shift instructions are detected within a predetermined period.

In this case, the engagement processing condition relates to a temporal change rate in a hydraulic pressure supplied to the friction engagement element. If two or more gear-shift instructions are detected within the predetermined period, the condition calculation means calculates a temporal change rate in the hydraulic pressure such that the temporal change rate becomes higher than a preset change rate. Thus, the friction engagement element is engaged more quickly than usual. The first output means outputs a first instruction. Thus, input torque of the automatic transmission is adjusted on the basis of the first adjustment amount. As a result, the gear-shift control apparatus can adjust gear-shift responsive characteristics and restrain the occurrence of a gear-shift shock in response to information regarding the automatic transmission.

In the gear-shift control apparatus of the second aspect, the detection means may include means for detecting a gear-shift instruction to the automatic transmission and means for detecting an input speed of the automatic transmission. The condition calculation means may include means for calculating a temporal change rate in the hydraulic pressure such that the temporal change rate becomes higher than a preset change rate if the input speed satisfies a predetermined condition with two or more gear-shift instructions having been detected within a predetermined period. The first output means may include means for outputting the first instruction if the input speed satisfies a predetermined condition with two or more gear-shift instructions having been detected within a predetermined period.

In this case, if the input speed satisfies the predetermined condition with two or more gear-shift instructions having been detected within the predetermined period (e.g., if the input speed is not a speed at which the inertia phase begins), the condition detection means calculates a temporal change rate in the hydraulic pressure such that the temporal change rate becomes higher than a preset change rate. Thus, the friction engagement element is engaged more quickly than usual. The first output means outputs a first instruction. Input torque of the automatic transmission is adjusted on the basis of the first adjustment amount. As a result, the gear-shift control apparatus can restrain the occurrence of a gear-shift shock in response to information regarding the automatic transmission.

In addition to the aforementioned arrangement, the gear-shift control apparatus of the second aspect may further include acceleration request detection means for detecting an acceleration request made by a driver of the vehicle, second output means for outputting a second instruction for adjusting the input torque on the basis of a second adjustment amount calculated in advance if the acceleration request satisfies a predetermined condition, and determination means for determining whether to adjust the input torque on the basis of one of the first and second adjustment amounts if the acceleration request satisfies a predetermined condition.

In this case, the engagement processing condition relates to the temporal change rate in the hydraulic pressure supplied to the friction engagement element. The acceleration request detection means detects an acceleration request made by the driver of the vehicle (e.g., whether the vehicle is to be accelerated at a constant rate, to be accelerated abruptly, to be decelerated, or the like). If the acceleration request satisfies a predetermined condition (e.g., if the temporal change rate in throttle opening is higher than a predetermined change rate), the determination means determines, on the basis of the acceleration request, whether to adjust the input torque on the basis of the first adjustment amount or the second adjustment amount. For example, if the driver abruptly depresses the accelerator, the determination means determines that the input torque of the automatic transmission is to be adjusted on the basis of the second adjustment amount. The second output means outputs a second instruction. Thus, the input torque is adjusted on the basis of the second adjustment amount. As a result, the gear-shift control apparatus can restrain the occurrence of a gear-shift shock in response to an acceleration request made by the driver.

Furthermore, in the aforementioned arrangement, the detection means may include means for detecting a gear-shift instruction to the automatic transmission and means for detecting an input speed of the automatic transmission. The acceleration request detection means may include means for detecting a throttle opening of the vehicle. The determination means may include means for determining that the input torque is to be adjusted on the basis of the second adjustment amount if the input speed satisfies the predetermined condition with the throttle opening being larger than a predetermined opening and with two or more gear-shift instructions having been detected within a predetermined period.

In this case, the second adjustment amount is larger than the first adjustment amount. The acceleration request detection means detects a throttle opening of the vehicle. If the input speed satisfies the predetermined condition with the throttle opening being larger than the predetermined opening and with two or more gear-shift instructions having been detected within the predetermined period (e.g., if the input speed has not reached a speed at which the inertia phase begins), the determination means determines that input torque is to be adjusted on the basis of the second adjustment amount. The second output means outputs a second instruction. In such a case, therefore, input torque is adjusted on the basis of an adjustment amount that is larger than a normal adjustment amount for restraining the occurrence of a gear-shift shock. As a result, the gear-shift control apparatus can restrain the occurrence of a gear-shift shock while adjusting gear-shift responsive characteristics.

A gear-shift control method in accordance with a third aspect of the invention includes a detection step of detecting information regarding the automatic transmission, a first condition calculation step of calculating an engagement processing condition if the information satisfies a predetermined condition, a period calculation step of calculating a criterion period from a timing when the gear-shift stage is established to a timing when it is determined that a gear shift has been completed if the information satisfies the predetermined condition, a determination step of determining that a processing based on the instruction has been completed if a predetermined reference period elapses after establishment of the gear-shift stage, and a set step of setting the criterion period as the reference period.

This gear-shift control method is adapted to control an automatic transmission installed in a vehicle. In the detection step of this gear-shift control method, information regarding the automatic transmission (e.g., gear-shift instructions, the input and output speeds of the automatic transmission, the temperature of working fluid, the torque of an input shaft, and the like) is detected or estimated. If the information regarding the automatic transmission satisfies the predetermined condition (e.g., if gear-shift responsive characteristics are to be improved with a multiple gear-shift instruction having been issued or if the gear-shift operation is quickly performed with a sufficiently high oil temperature of working fluid and with good responsive characteristics of hydraulic pressure), an engagement processing condition is calculated in the first condition calculation step. This engagement processing condition is a condition relating to a processing that is performed after a command value for the hydraulic pressure for engaging the first friction engagement element is output on the basis of an instruction to the automatic transmission and before a gear-shift stage based on the instruction is established (e.g., a condition relating to the temporal change rate in the hydraulic pressure that is supplied so as to engage the friction engagement element, a condition relating to the period required for engagement of the friction engagement element, or the like). In this case, a criterion period is calculated in the period calculation step. This criterion period starts when the gear-shift stage based on the instruction is established, and ends when it is determined that the gear-shift has been completed. The criterion period is set as the predetermined reference period in the set step. It is determined in the determination step that a processing based on the instruction (e.g., an engagement processing) has been completed if the reference period elapses after the hydraulic-pressure command value for engaging the first friction engagement element has been output. Namely, if gear-shift responsive characteristics are required in respect of the automatic transmission, an engagement processing condition satisfying the requirement (e.g., a condition that the first friction engagement element be engaged on the basis of a change rate that is higher than a preset temporal change rate in hydraulic pressure, or the like) is calculated in the first condition calculation step. A criterion period that is shorter than the preset reference period is calculated in the period calculation step. If the criterion period elapses, it is determined in the determination step that the processing based on the instruction has been completed. Accordingly, the automatic transmission makes a gear shift more quickly in comparison with a case where there is no need to ensure gear-shift responsive characteristics. On the other hand, if restraint of the occurrence of a gear-shift shock is required in respect of the automatic transmission, an engagement processing condition satisfying the requirement (e.g., a condition that the first friction engagement element be engaged on the basis of a change rate that is lower than a preset temporal change rate in hydraulic pressure, or the like) is calculated in the first condition calculation step. A criterion period that is longer than the preset reference period is calculated in the period calculation step. Thus, the automatic transmission gently makes a gear shift so as to restrain the occurrence of a gear-shift shock. Thus, the automatic transmission can perform a gear-shift processing of adjusting gear-shift responsive characteristics and a gear-shift processing of restraining the occurrence of a gear-shift shock in response to information regarding the automatic transmission. As a result, it is possible to provide a gear-shift control method capable of adjusting gear-shift responsive characteristics and restraining the occurrence of a gear-shift shock in response to information regarding the automatic transmission.

In the gear-shift control method of the third aspect, the detection step may include a step of detecting a gear-shift instruction to the automatic transmission. The first condition calculation step may include a step of calculating a temporal change rate in the first hydraulic pressure such that the temporal change rate becomes higher than a first preset change rate if two or more gear-shift instructions are detected within a predetermined period.

In this case, the engagement processing condition relates to the temporal change rate in the first hydraulic pressure that is supplied to the first friction engagement element so as to engage the first friction engagement element. If two or more gear-shift instructions (e.g., the fifth-speed range → the fourth-speed range → the third-speed range) are detected within the predetermined period, a temporal change rate in the first hydraulic pressure is calculated in the first condition calculation step such that the temporal change rate becomes higher than a first preset change rate. Thus, the first friction engagement element is more quickly engaged in comparison with a case where a single gear-shift instruction has been detected. As a result, the gear-shift control method makes it possible to adjust gear-shift responsive characteristics in response to information regarding the automatic transmission.

In the gear-shift control method of the third aspect, the detection step may include a step of detecting an input speed of the automatic transmission and a step of detecting a gear-shift instruction to the automatic transmission. The first condition calculation step may include a step of calculating a temporal change rate in the first hydraulic pressure such that the temporal change rate becomes higher than a first preset change rate if the input speed satisfies a predetermined condition with two or more gear-shift instructions having been detected within a predetermined period.

In this case, the engagement processing condition relates to the temporal change rate in the first hydraulic pressure that is supplied to the first friction engagement element so as to engage the first friction engagement element. If the input speed satisfies the predetermined condition with two or more gear-shift instructions having been detected within the predetermined period (e.g., if the input speed is a speed prior to the start of the inertia phase of the automatic transmission or if the temporal change rate in input speed is within a predetermined range), a temporal change rate in the first hydraulic pressure is calculated in the first condition calculation step such that the temporal change rate becomes higher than a first preset change rate. The inertia phase is a certain state of the automatic transmission. If the inertia phase begins, the input speed of the automatic transmission starts to change, and it becomes difficult to switch control parameters for gear-shift processings. Thus, if an engagement processing condition (i.e., a condition relating to the temporal change rate in the first hydraulic pressure) is calculated after the input speed has been confirmed (e.g., after it is confirmed on the basis of the input speed that the inertia phase has not begun), the automatic transmission makes a gear shift more quickly in comparison with a case where two or more gear-shift instructions are not detected. Thus, the gear-shift control method makes it possible to adjust gear-shift responsive characteristics in response to information regarding the automatic transmission.

In the gear-shift control method of the third aspect, the detection step may include a step of detecting a gear-shift instruction to the automatic transmission. The period calculation step may include a step of calculating a criterion period such that the criterion period becomes shorter than a preset reference period if two or more gear-shift instructions are detected within a predetermined period.

In this case, if two or more gear-shift instructions are detected within the predetermined period, a criterion period is calculated in the period calculation step such that the criterion period becomes shorter than a preset reference period. Accordingly, if two or more gear-shift instructions are detected within the predetermined period, the period for confirming completion of a gear-shift processing based on the first gear-shift instruction is shortened, and a gear-shift processing based on the subsequent gear-shift instruction is started early. Thus, the gear-shift control method makes it possible to adjust gear-shift responsive characteristics in response to information regarding the automatic transmission.

In the gear-shift control method of the third aspect, the detection step may include a step of detecting a gear-shift instruction to the automatic transmission and a step of detecting an input speed of the automatic transmission. The period calculation step may include a step of calculating a criterion period such that the criterion period becomes shorter than a preset reference period if the input speed satisfies a predetermined condition with two or more gear-shift instructions having been detected within a predetermined period.

In this case, if the input speed satisfies the predetermined condition with two or more gear-shift instructions having been detected within the predetermined period (e.g., when the input speed is a speed prior to the start of an inertia phase of the automatic transmission, when the temporal change rate in input speed is within a predetermined range, or the like), a criterion period is calculated in the period calculation step such that the criterion period becomes shorter than a preset reference period. By setting the criterion period short before the inertia phase begins, the period required for confirmation of completion of a gear-shift processing can be reduced. As a result, the period that elapses until a subsequent gear shift is started is reduced. This makes it possible to improve gear-shift responsive characteristics.

The gear-shift control method of the third aspect may further include a second condition calculation step for calculating a release processing condition if the information satisfies the predetermined condition.

In this case, a release processing condition is calculated in the second condition calculation step. This release processing condition relates to a processing that is performed after an instruction is output to the automatic transmission and before the second friction engagement element is released. Namely, if gear-shift responsive characteristics are required in respect of the automatic transmission, a release processing condition satisfying the requirement (e.g., a condition that the second friction engagement element be released on the basis of a change rate that is higher than a preset temporal change rate in hydraulic pressure, or the like) is calculated in the second condition calculation step. In this case, the automatic transmission makes a gear shift earlier in comparison with a case where gear-shift responsive characteristics are not required. On the other hand, if restraint of the occurrence of a gear-shift shock is required in respect of the automatic transmission, a release processing condition satisfying the requirement (e.g., a condition that the second friction engagement element be engaged on the basis of a change rate that is lower than a preset temporal change rate in hydraulic pressure, or the like) is calculated in the second condition calculation step. In this case, the automatic transmission makes a gear shift more gently in comparison with a case where restraint of a gear-shift shock is not required. This makes it possible to adjust gear-shift responsive characteristics and to restrain the occurrence of a gear-shift shock in response to information regarding the automatic transmission.

In the aforementioned gear-shift control method, the detection step may include a step of detecting a gear-shift instruction to the automatic transmission. The first condition calculation step may include a step of calculating a temporal change rate in the first hydraulic pressure such that the temporal change rate becomes higher than a first preset change rate if two or more gear-shift instructions are detected within a predetermined period. The second condition calculation step may include a step of calculating a temporal change rate in the second hydraulic pressure such that the temporal change rate becomes higher than a second preset change rate if two or more gear-shift instructions are detected within a predetermined period.

In this case, the engagement processing condition relates to a temporal change rate in the first hydraulic pressure that is supplied to the first friction engagement element so as to engage the first friction engagement element. The release processing condition relates to a temporal change rate in the second hydraulic pressure that is supplied to the second friction engagement element so as to release the second friction engagement element. If two or more gear-shift instructions are detected within the predetermined period, a temporal change rate in the first hydraulic pressure is calculated in the first condition calculation step such that the temporal change rate becomes higher than a first preset change rate. A temporal change rate in the second hydraulic pressure is calculated in the second condition calculation step such that the temporal change rate becomes higher than a second preset change rate. Namely, the second friction engagement element is quickly released, and the first friction engagement element is quickly engaged. Thus, the gear-shift control method makes it possible to adjust gear-shift responsive characteristics in response to information regarding the automatic transmission.

The gear-shift control method of the third aspect may include a detection step of detecting information regarding the automatic transmission, a condition calculation step of calculating an engagement processing condition if the information satisfies a predetermined condition, and a first output step of outputting a first instruction for adjusting the input torque on the basis of a first adjustment amount calculated in advance if the information satisfies the predetermined condition.

A gear-shift control method in accordance with a fourth aspect of the invention is adapted to control an automatic transmission installed in a vehicle. Input torque of the automatic transmission is controlled by torque control means of a power source (e.g., an engine) of the vehicle. Information regarding the automatic transmission (e.g., gear-shift instructions, the input and output speeds of the automatic transmission, the temperature of working fluid, the torque of an input shaft, and the like) is detected or estimated in a detection step of this gear-shift control method. If the information satisfies a predetermined condition (e.g., if two or more gear-shift instructions are detected within a predetermined period), an engagement processing condition is calculated in a condition calculation step. This engagement processing condition relates to a processing that is performed after a hydraulic-pressure command value for engaging a friction engagement element on the basis of an instruction to the automatic transmission is output and before a gear-shift stage based on the instruction is established. A first instruction for adjusting input torque on the basis of a first adjustment amount calculated in advance is output in a first output step. If the first instruction is output, output torque of the power source is adjusted in a torque adjustment step, and the adjusted torque is input to the automatic transmission. This makes it possible to restrain the occurrence of a shock resulting from establishment of a certain gear-shift stage of the automatic transmission. As a result, it is possible to provide a gear-shift control method making it possible to restrain the occurrence of a gear-shift shock in response to information regarding the automatic transmission.

In the gear-shift control method of the fourth aspect, the detection step may include a step of detecting a gear-shift instruction to the automatic transmission. The condition calculation step may include a step of calculating a temporal change rate in the hydraulic pressure such that the temporal change rate becomes higher than a preset change rate if two or more gear-shift instructions are detected within a predetermined period. The first output step may include a step of outputting the first instruction if two or more gear-shift instructions are detected within a predetermined period.

In this case, the engagement processing condition relates to a temporal change rate in a hydraulic pressure supplied to the friction engagement element. If two or more gear-shift instructions are detected within the predetermined period, a temporal change rate in the hydraulic pressure is calculated in the condition calculation step such that the temporal change rate becomes higher than a preset change rate. Thus, the friction engagement element is engaged more quickly than usual. A first instruction is output in the first output step. Thus, input torque of the automatic transmission is adjusted on the basis of the first adjustment amount. As a result, the gear-shift control method makes it possible to adjust gear-shift responsive characteristics and to restrain the occurrence of a gear-shift shock in response to information regarding the automatic transmission.

In the gear-shift control method of the fourth aspect, the detection step may include a step of detecting a gear-shift instruction to the automatic transmission and a step of detecting an input speed of the automatic transmission. The condition calculation step may include a step of calculating a temporal change rate in the hydraulic pressure such that the temporal change rate becomes higher than a preset change rate if the input speed satisfies a predetermined condition with two or more gear-shift instructions having been detected within a predetermined period. Furthermore, the first output step may include a step of outputting the first instruction if the input speed satisfies a predetermined condition with two or more gear-shift instructions having been detected within a predetermined period.

In this case, if the input speed satisfies the predetermined condition with two or more gear-shift instructions having been detected within the predetermined period (e.g., if the input speed is not a speed at which the inertia phase begins), a temporal change rate in the hydraulic pressure is calculated in the condition detection step such that the temporal change rate becomes higher than a preset change rate. Thus, the friction engagement element is engaged more quickly than usual. A first instruction is output in the first output step. Thus, input torque of the automatic transmission is adjusted on the basis of the first adjustment amount. As a result, the gear-shift control method makes it possible to restrain the occurrence of a gear-shift shock in response to information regarding the automatic transmission.

The gear-shift control method of the fourth aspect may further include an acceleration request detection step of detecting an acceleration request made by a driver of the vehicle, a second output step of outputting a second instruction for adjusting the input torque on the basis of a second adjustment amount calculated in advance if the acceleration request satisfies a predetermined condition, and a determination step of determining whether to adjust the input torque on the basis of one of the first and second adjustment amounts if the acceleration request satisfies a predetermined condition.

In this case, the engagement processing condition relates to the temporal change rate in the hydraulic pressure supplied to the friction engagement element. An acceleration request made by the driver of the vehicle (e.g., whether the vehicle is to be accelerated at a constant rate, to be accelerated abruptly, to be decelerated, or the like) is detected in the acceleration request detection step. If the acceleration request satisfies a predetermined condition (e.g., if the temporal change rate in throttle opening is higher than a predetermined change rate), it is determined in the determination step on the basis of the acceleration request whether to adjust the input torque on the basis of the first adjustment amount or the second adjustment amount. For example, if the driver abruptly depresses the accelerator, it is determined in the determination step that the input torque of the automatic transmission is to be adjusted on the basis of the second adjustment amount. A second instruction is output in the second output step. Thus, the input torque is adjusted on the basis of the second adjustment amount. As a result, the gear-shift control method makes it possible to restrain the occurrence of a gear-shift shock in response to an acceleration request made by the driver.

In the gear-shift control method of the fourth aspect, the detection step may further include a step of detecting a gear-shift instruction to the automatic transmission and a step of detecting an input speed of the automatic transmission. The acceleration request detection step may include a step of detecting a throttle opening of the vehicle. The determination step may include a step of determining that the input torque is to be adjusted on the basis of the second adjustment amount if the input speed satisfies the predetermined condition with the throttle opening being larger than a predetermined opening and with two or more gear-shift instructions having been detected within a predetermined period.

In this case, the second adjustment amount is larger than the first adjustment amount. A throttle opening of the vehicle is detected in the acceleration request detection step. If the input speed satisfies the predetermined condition with the throttle opening being larger than the predetermined opening and with two or more gear-shift instructions having been detected within the predetermined period (e.g., if the input speed has not reached a speed at which the inertia phase begins), it is determined in the determination step that input torque is to be adjusted on the basis of the second adjustment amount. A second instruction is output in the second output step. In such a case, therefore, input torque is adjusted on the basis of an adjustment amount that is larger than an adjustment amount for restraining the occurrence of a normal gear-shift shock. As a result, the gear-shift control method makes it possible to restrain the occurrence of a gear-shift shock while adjusting gear-shift responsive characteristics.

The phrase "detect information regarding the automatic transmission" that will be used in claims of the invention includes detecting information regarding the automatic transmission and estimating information regarding the automatic transmission based on information other than the information regarding the automatic transmission.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
Fig. 1 is a control block diagram of a vehicle including an automatic transmission in accordance with an embodiment of the invention;
Fig. 2 is a flowchart illustrating the procedure of gear-shift control processings in accordance with the embodiment of the invention;
Fig. 3 is a flowchart illustrating the procedure of criterion period calculation processings in accordance with the embodiment of the invention;
Fig. 4 is a flowchart illustrating the procedure of hydraulic-pressure temporal change rate calculation processings in accordance with the embodiment of the invention;
Fig. 5 is a flowchart illustrating the procedure of torque-down amount calculation processings in accordance with the embodiment of the invention;
Fig. 6 is a chart illustrating modes that are set in the processings shown in Fig. 3 and the contents of the modes;
Fig. 7 is a chart illustrating modes that are set in the processings shown in Figs. 4 and 5 and the contents of the modes;
Figs. 8A to 8G are timing charts illustrating changes in characteristic values during a gear shift in accordance with the embodiment of the invention;
Figs. 9A to 9G are timing charts illustrating changes in characteristic values during a gear shift in accordance with the embodiment of the invention;
Figs. 10A to 10F are timing charts illustrating changes in characteristic values during a gear shift in accordance with the embodiment of the invention;
Figs. 11A to 11G are timing charts illustrating changes in characteristic values during a gear shift in accordance with the embodiment of the invention; and
Figs. 12A to 12F are timing charts illustrating changes in characteristic values during a gear shift that is performed by a generally employed gear-shift control apparatus.

### DETAILED DESCRIPTION OF PREFERRED EMBODIMENT

Hereinafter, the embodiment of the invention will be described with reference to the drawings. In the following description, like components are denoted by like reference symbols. Like components have like designations and like functions as well. Accordingly, detailed description of those components will not be repeated.

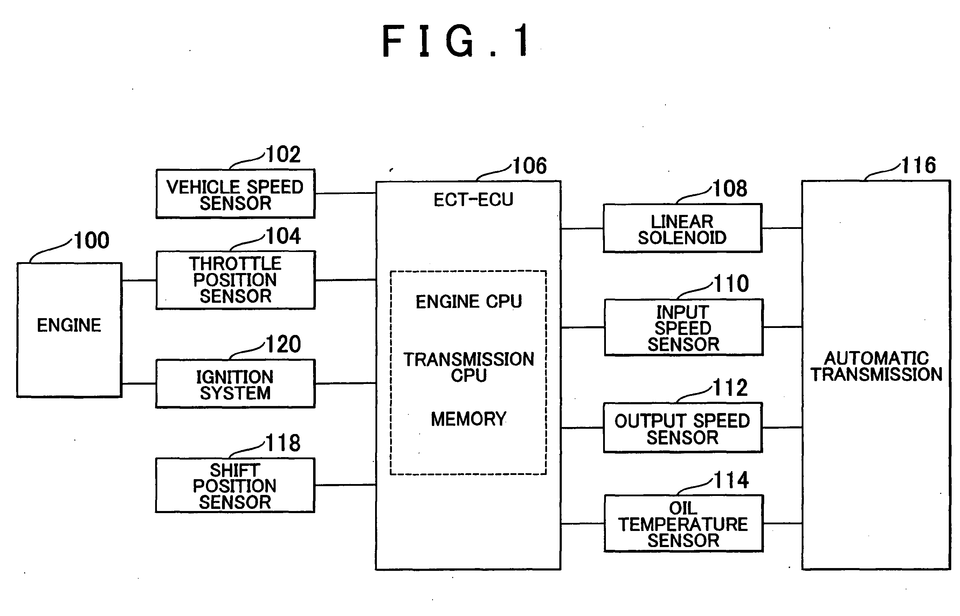

Fig. 1 is a control block diagram of an automatic transmission system including a gear-shift control apparatus in accordance with the embodiment of the invention. A vehicle equipped with the automatic transmission system includes an engine 100, a vehicle speed sensor 102, a throttle position sensor 104, an ECT (electronically controlled automatic transmission)-ECU (electronic control unit) 106, a linear solenoid 108, an input speed sensor 110, an output speed sensor 112, an oil temperature sensor 114, an automatic transmission 116, a shift position sensor 118, and an ignition system 120.

The ECT-ECU 106 is connected to the automatic transmission 116 via the linear solenoid 108, the input speed sensor 110, the output speed sensor 112, and the oil temperature sensor 114. The ECT-ECU 106 is connected to the engine 100 via the throttle position sensor 104 and the ignition system 120. Furthermore, the ECT-ECU 106 is connected to the vehicle speed sensor 102 and the shift position sensor 118.

The ECT-ECU 106 includes an engine CPU (central processing unit), a transmission CPU, and a memory. This memory stores ignition timings when the engine 100 is ignited by the ignition system 120, and fuel injection amounts.

The automatic transmission 116 includes a plurality of friction engagement elements for establishing gear-shift stages. The ECT-ECU 106 switches engaging states of the friction engagement elements by controlling the hydraulic pressures to be supplied thereto via the linear solenoid 108.

The ECT-ECU 106 detects a vehicle speed via the vehicle speed sensor 102. The ECT-ECU 106 detects an accelerator opening of the vehicle via the throttle position sensor 104. That is, an acceleration request made by the driver of the vehicle (e.g., whether the vehicle is to be accelerated at a constant rate, to be accelerated abruptly, to be decelerated, or the like) is estimated. The ECT-ECU 106 detects an input speed of the automatic transmission 116 via the input speed sensor 110. The ECT-ECU 106 detects an output speed of the automatic transmission 116 via the output speed sensor 112. The ECT-ECU 106 detects a temperature of working fluid contained in the automatic transmission 116 via the oil temperature sensor 114.

The ECT-ECU 106 detects a shift position selected by a driver via the shift position sensor 118. After having calculated a gear-shift stage on the basis of the shift position, the ECT-ECU 106 transmits a signal for establishing the gear-shift stage to the linear solenoid 108. On the basis of the signal, the linear solenoid 108 controls the hydraulic pressures to be supplied to the friction engagement elements so as to establish the calculated gear-shift stage.

The ECT-ECU 106 adjusts the output torque of the engine 100 by adjusting the ignition timing of the ignition system 120. Namely, the ignition system 120 ignites the engine 100 at an ignition timing calculated on the basis of a torque adjustment amount. This torque adjustment amount is calculated in advance on the basis of running characteristics of the vehicle (e.g., temporal change rate of throttle opening, engine speed, engine output torque, and the like) or operating characteristics of the automatic transmission (e.g., input speed, gear-shift pattern, and the like). The torque adjustment as described above can be carried out in an engine having an ignition system, for example, a gasoline engine. In the case of a diesel engine, for example, the output torque of the engine can be adjusted by controlling the fuel injection amount.

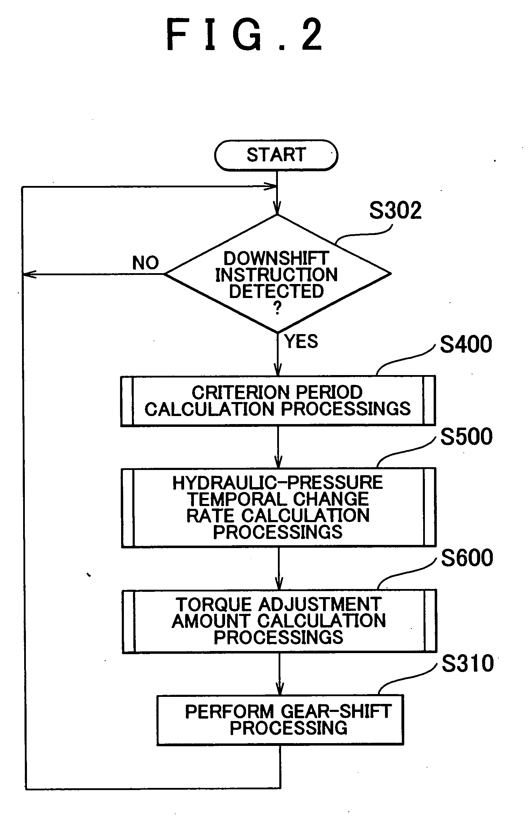

The procedure in which the automatic transmission system in accordance with this embodiment controls the automatic transmission will be described with reference to a flowchart shown in Fig. 2.

In S302, the ECT-ECU 106 determines whether or not a downshift instruction has been detected. If it is determined that the downshift instruction has been detected (YES in S302), the procedure is shifted to S400. If not (NO in S302), the procedure is returned to S302.

In S400, the ECT-ECU 106 performs criterion period calculation processings, which will be described later. By performing these processings, a criterion period corresponding to information regarding the automatic transmission 116 (e.g., the number of gear-shift instructions, input speed, the temperature of working fluid) is calculated. The criterion period starts when engaging processings of the friction engagement elements based on the gear-shift instruction are completed, and ends when it is determined that the gear shift has been terminated.

In S500, the ECT-ECU 106 performs hydraulic-pressure temporal change rate calculation processings, which will be described later. By performing these processings, temporal change rates in hydraulic pressure during the processings of releasing the friction engagement elements and during the processings of engaging the friction engagement elements. The temporal change rates correspond to information regarding the automatic transmission 116 (e.g., the number of gear-shift instructions, input speed, the temperature of working fluid, input torque, and the like). In other words, a period for engaging and releasing a friction engagement element is calculated.

In S600, the ECT-ECU 106 performs torque adjustment amount calculation processings, which will be described later. By performing these processings, torque adjustment amounts (e.g., first and second adjustment amounts or the like (the first adjustment amount < the second adjustment amount) The second adjustment amount is larger than a normal adjustment amount for restraining the occurrence of a gear-shift shock.) corresponding to information regarding the automatic transmission 116 (e.g., the number of gear-shift instructions, input speed, the temperature of working fluid, input torque, and the like) are calculated.

In S310, the ECT-ECU 106 performs a gear-shift processing on the basis of the criterion period and the torque adjustment amounts. Namely, after having detected the gear-shift instruction, the ECT-ECU 106 controls the hydraulic pressure via the linear solenoid 108 on the basis of the calculated temporal change rate in hydraulic pressure, so as to release the engaged friction engagement elements. The ECT-ECU 106 supplies the hydraulic pressure on the basis of the calculated temporal change rate in hydraulic pressure via the linear solenoid 108, so as to engage the friction engagement elements before the criterion period elapses after a command value for hydraulic pressure has been output.

Furthermore, the ECT-ECU 106 adjusts the output torque of the engine 100 in response to the command value. Namely, the engine CPU adjusts the output torque of the engine 100 via the ignition system 120. This adjustment is carried out, for example, by changing the timing when fuel is ignited. If the criterion period elapses after engagement of the friction engagement elements, the ECT-ECU 106 determines that the gear shift has been completed. After having made this determination, the ECT-ECU 106 outputs a subsequent gear-shift instruction.

### [Criterion Period Calculation Processings]

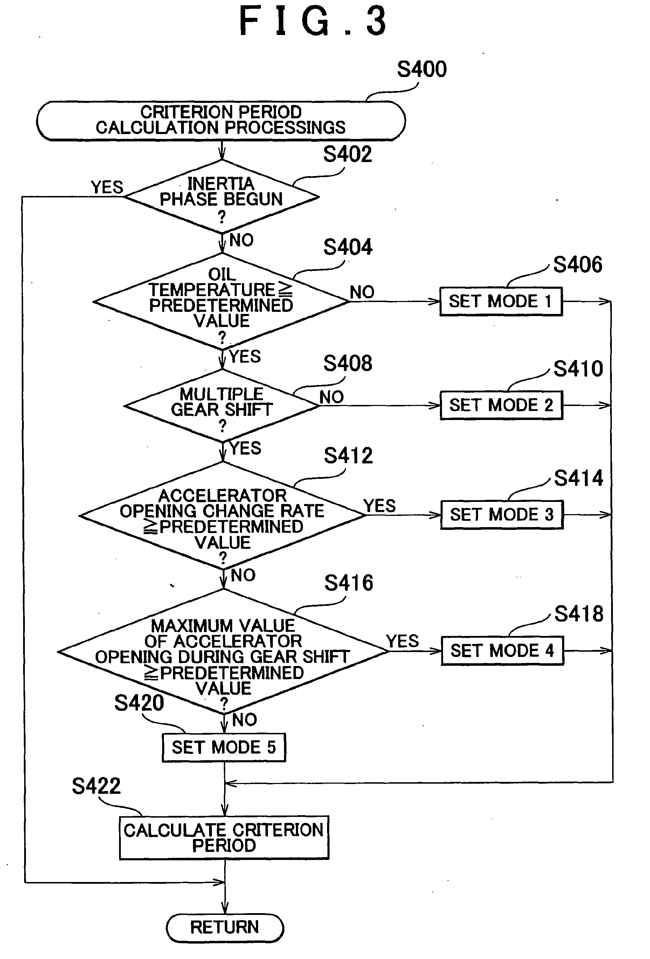

The procedure of calculating a criterion period in accordance with the embodiment of the invention will be described with reference to a flowchart shown in Fig. 3.

In S402, the ECT-ECU 106 determines whether or not an inertia phase has begun in the automatic transmission 116, that is, whether or not the input speed has not reached a speed at which the inertia phase begins. The inertia phase is a certain state of the automatic transmission 116. If the inertia phase begins, the input speed of the automatic transmission 116 starts to change. If the inertia phase has begun in the automatic transmission 116 (YES in S402), the criterion period calculation processings are terminated, and the procedure is returned to main processings. If not (NO in S402), the procedure is shifted to S404. Thus, it is possible that an appropriate criterion period is set before the inertia phase begins. S402 may be replaced a step of confirming whether or not the temporal change rate in input speed is within a predetermined range.

In S404, the ECT-ECU 106 determines whether or not the temperature of working fluid contained in the automatic transmission 116 is equal to or higher than a predetermined temperature. If it is determined that the temperature of working fluid is equal to or higher than the predetermined temperature (the temperature of working fluid is a sufficiently high and responsive characteristics of hydraulic pressure is good) (YES in S404), the procedure is shifted to S408. If not (NO in S404), the procedure is shifted to S406. In S406, the ECT-ECU 106 sets the mode to be used in S422 as a " mode 1".

In S408, the ECT-ECU 106 determines whether or not the gear-shift instruction is a multiple gear-shift instruction. If it is determined that the gear-shift instruction is a multiple gear-shift instruction (YES in S408), the procedure is shifted to S412. If not (NO in S408), the procedure is shifted to S410. In S410, the ECT-ECU 106 sets the mode to be used in S422 as a "mode 2".

In S412, the ECT-ECU 106 determines whether or not the temporal change rate in accelerator opening is equal to or higher than a predetermined change rate. If it is determined that the temporal change rate in accelerator opening is equal to or higher than the predetermined change rate (YES in S412), the procedure is shifted to S414. If not (NO in S412), the procedure is shifted to S416. In S414, the ECT-ECU 106 sets the mode to be used in S422 as a "mode 3".

In S416, the ECT-ECU 106 determines whether or not the maximum accelerator opening during a gear shift of the automatic transmission 116 is equal to or larger than a predetermined value. If it is determined that the maximum accelerator opening during the gear shift of the automatic transmission 116 is equal to or larger than the predetermined value (YES in S416), the procedure is shifted to S418. If not (NO in S416), the procedure is shifted to S420.

In S418, the ECT-ECU 106 sets the mode to be used in S422 as a "mode 4". In S420, the ECT-ECU 106 sets the mode to be used in S422 as a "mode 5".

In S422, the ECT-ECU 106 calculates a criterion period in response to the set mode. Then, the ECT-ECU 106 terminates the criterion period calculation processings and returns to the main processings.

### [Hydraulic-Pressure Temporal Change Rate Calculation Processings]

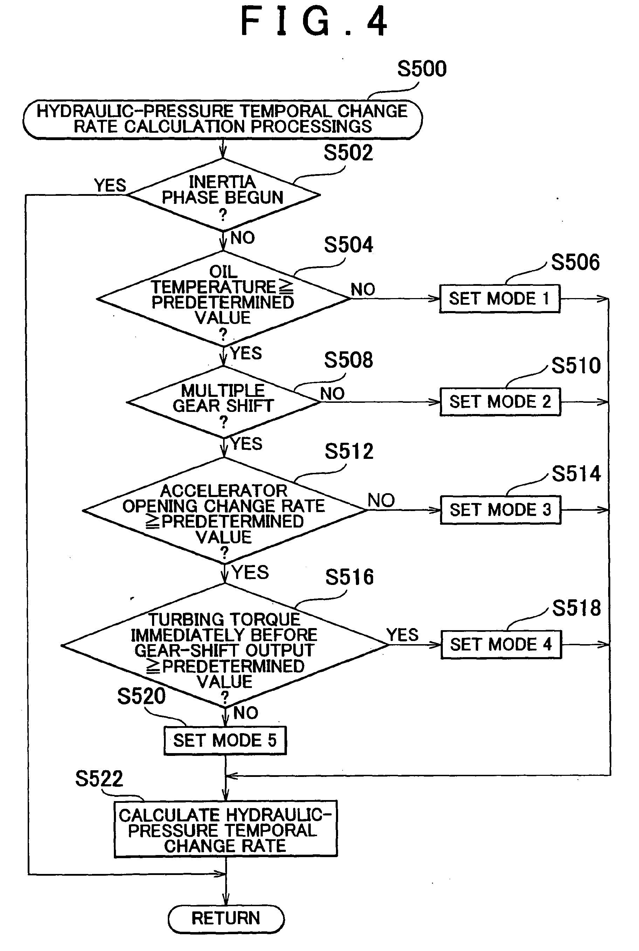

The procedure of calculating a temporal change rate in hydraulic pressure in accordance with the embodiment of the invention will be described with reference to a flowchart shown in Fig. 4.

In S502, the ECT-ECU 106 determines whether or not the inertia phase has begun in the automatic transmission 116. If it is determined that the inertia phase has begun in the automatic transmission 116 (YES in S502), the ECT-ECU 106 terminates the hydraulic-pressure temporal change rate calculation processings and returns to the main processings. If not (NO in S502), the procedure is shifted to S504.

In S504, the ECT-ECU 106 determines whether or not the temperature of working fluid contained in the automatic transmission 116 is equal to or higher than a predetermined temperature. If it is determined that the temperature of working fluid is equal to or higher than a predetermined temperature (YES in S504), the procedure is shifted to S508. If not (NO in S504), the procedure is shifted to S506. In S506, the ECT-ECU 106 sets the mode to be used in S522 as the "mode 1".

In S508, the ECT-ECU 106 determines whether or not the gear-shift instruction is a multiple gear-shift instruction. If it is determined that the gear-shift instruction is the multiple gear-shift instruction (YES in S508), the procedure is shifted to S512. If not (NO in S508), the procedure is shifted to S510. In S510, the ECT-ECU 106 sets the mode to be used in S522 as the "mode 2".

In S512, the ECT-ECU 106 determines whether or not the temporal change rate in accelerator opening is equal to or higher than a predetermined change rate. If it is determined that the temporal change rate in accelerator opening is equal to or higher than the predetermined change rate (YES in S512), the procedure is shifted to S516. If not (NO in S512), the procedure is shifted to S514. In S514, the ECT-ECU 106 sets the mode to be used in S522 as the "mode 3".

In S516, the ECT-ECU 106 determines whether or not the input torque of the automatic transmission 116 is equal to or larger than a predetermined value immediately before the gear-shift instruction is output. If it is determined that the input torque is equal to or larger than the predetermined value immediately before the gear-shift instruction is output (YES in S516), the procedure is shifted to S518. If not (NO in S516), the procedure is shifted to S520.

In S518, the ECT-ECU 106 sets the mode to be used in S522 as the "mode 4". In S520, the ECT-ECU 106 sets the mode to be used in S522 as the "mode 5".

In S522, the ECT-ECU 106 calculates a temporal change rate in the hydraulic pressure used during the processings of releasing the friction engagement elements and a temporal change rate in the hydraulic pressure used during the processings of engaging the friction engagement elements in response to the set mode. Then, the ECT-ECU 106 terminates the hydraulic-pressure temporal change rate calculation processings and returns to the main processings.

### [Torque Adjustment Amount Calculation Processings]

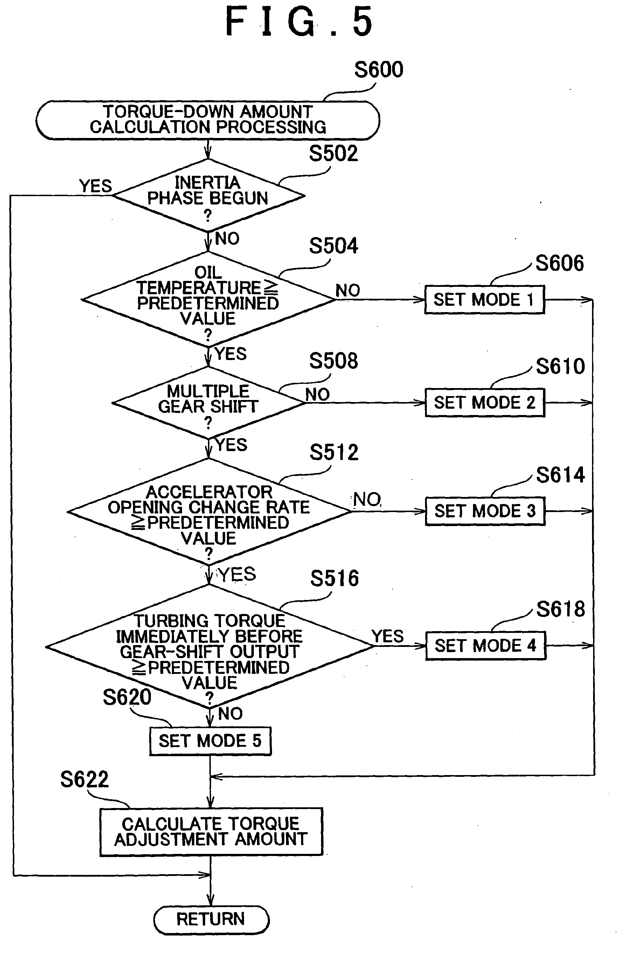

The torque adjustment calculation processings performed by the ECT-ECU 106 will be described with reference to a flowchart shown in Fig. 5. The determination processings for specifying the mode to be used in S622, namely, the contents in S502, S504, S508, S512, and S516 will not be described below because they are identical with those of "the hydraulic-pressure temporal change rate calculation processings" mentioned above.

In S606, the ECT-ECU 106 sets the mode to be used in S622 as the "mode 1". In S610, the ECT-ECU 106 sets the mode to be used in S622 as the "mode 2". In S614, the ECT-ECU 106 sets the mode to be used in S622 as the "mode 3". In S618, the ECT-ECU 106 sets the mode to be used in S622 as the "mode 4". In S620, the ECT-ECU 106 sets the mode to be used in S622 as the "mode 5" .

In S622, the ECT-ECU 106 calculates a torque adjustment amount in response to the set mode. Namely, if one of the modes 1 to 3 is set, a second adjustment amount is calculated. If the mode 4 or the mode 5 is set, a first adjustment amount is calculated. The first adjustment amount is larger than the second adjustment amount. Then, the torque adjustment amount calculation processings are terminated, and the procedure is returned to the main processings.

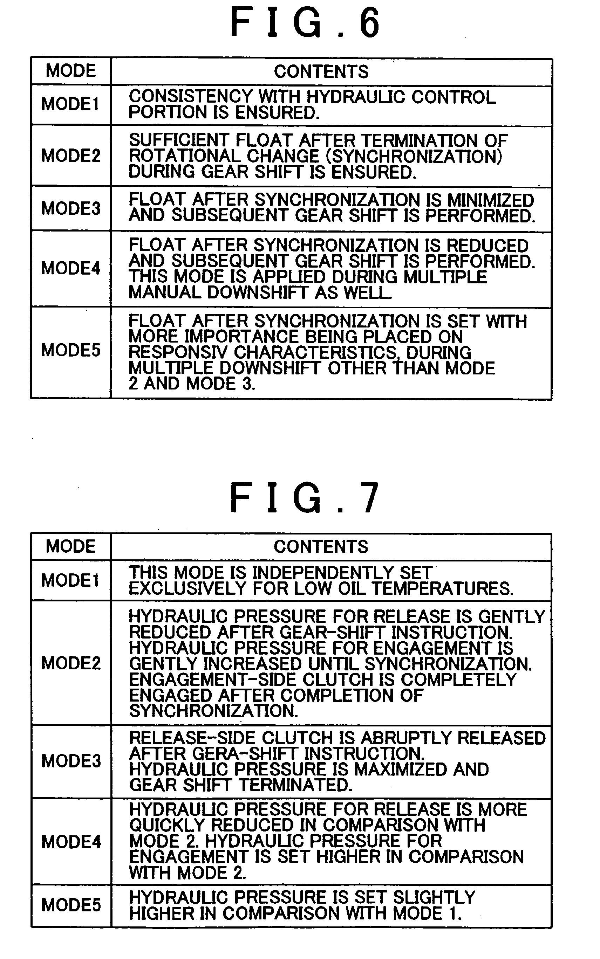

Fig. 6 shows the contents of criterion periods that are separately set for the modes. The "contents" correspond to the "modes 1 to 5" respectively, and represent requisites for setting the modes respectively. In response to the oil temperature of the automatic transmission 116, the temporal change rate in accelerator opening, and the like, the criterion periods in the "modes 3 and 4" are set shorter than the criterion period set for the "mode 1". If the number of combinations of conditions to be used is increased, it is possible to calculate a criterion period more finely. As a result, gear-shift control can be performed with high precision.

Fig. 7 shows the contents of hydraulic pressures that are separately set for the modes. The "contents" correspond to the "modes 1 to 5" respectively, and represent requisites for setting the modes respectively. In response to the oil temperature of the automatic transmission 116, the temporal change rate in accelerator opening, and the like, the temporal change rates in hydraulic pressure in the "modes 3 and 4" are set higher than the temporal change rate set for the "mode 1". If the number of combinations of conditions to be used is increased, it is possible to calculate a temporal change rate in hydraulic pressure more finely. As a result, gear-shift control can be performed with high precision.

It will now be described how an automatic gear-shift system in accordance with this embodiment operates on the basis of the structure and the flowcharts as described above. The following description handles a case where the driver of the vehicle suddenly depresses the accelerator when the vehicle runs in the fifth-speed range and where a downshift (i.e., so-called "kick-down") to the third-speed range is performed on the basis of a depression amount of the accelerator and a vehicle speed at that moment.

### [Gear-Shift from Fifth-Speed Range to Third-Speed Range]

If a downshift instruction sent from the driver is detected (YES in S302), the criterion period calculation processings are performed (S400). On the ground that the temperature of working fluid contained in the automatic transmission 116 is equal to or higher than the predetermined temperature (YES in S404), that the gear-shift instruction is a multiple gear-shift (i.e., from the fifth-speed range to the third-speed range) instruction (YES in S408), and that the temporal change rate in accelerator opening is equal to or higher than the predetermined change rate (YES in S412), the "mode 3" is set (S414).

A criterion period is calculated on the basis of the "mode 3" (S422). Because the gear shift in this case is a multiple gear shift with the accelerator being depressed all of a sudden, a criterion period that places importance on gear-shift responsive characteristics is calculated. That is, the criterion period is such a period as minimizes the time required for the first gear shift (from the fifth-speed range to the fourth-speed range) within an allowable range. Thus, a gear shift from the fourth-speed range to the third-speed range is started upon completion of the gear shift from the fifth-speed range to the fourth-speed range.

After the criterion period has been calculated, the hydraulic-pressure temporal change rate calculation processings are performed (S500). On the ground that the temperature of working fluid contained in the automatic transmission 116 is equal to or higher than the predetermined temperature (YES in S504), that the gear-shift instruction is a multiple gear-shift instruction (YES in S508), and that the temporal change rate in accelerator opening is equal to or higher than the predetermined change rate (YES in S512), and that the torque that is input to the automatic transmission 116 immediately before the gear-shift instruction is output is equal to or larger than the predetermined value (YES in S516), the "mode 4" is set (S518).

A temporal change rate in hydraulic pressure is calculated on the basis of the "mode 4" (S522). Because the gear shift in this case is a multiple gear shift with the accelerator being depressed all of a sudden, such a temporal change rate as quickens the switching of engaging states of the friction engagement elements is calculated so as to ensure responsive characteristics. Accordingly, the hydraulic pressure for releasing the engaged friction engagement elements within a short period and the hydraulic pressure for engaging the released friction engagement elements within a short period are supplied.

After the temporal change rate in hydraulic pressure has been calculated, the torque adjustment amount calculation processings are performed (S600). Because the conditions used in performing these processings are identical with those used in calculating the temporal change rate in hydraulic pressure, the mode to be set is the "mode 4".

A torque adjustment amount is calculated on the basis of the "mode 4" (S622). Because the gear shift in this case allows engagement of the friction engagement elements within a short period, a shock tends to occur. Accordingly, such an adjustment amount as more or less prevents the torque from overshooting when the friction engagement elements are engaged is calculated. This adjustment amount is larger, for example, than an adjustment amount that is calculated when the gear shift is not a multiple gear shift.

After the criterion period, the temporal change rate in hydraulic pressure, and the torque adjustment amount have been calculated, the automatic transmission 116 makes a gear shift on the basis of those values in S310. Namely, the friction engagement elements are switched on the basis of the gear-shift instruction. In making a gear shift from the fifth-speed range to the fourth-speed range, since the fourth-speed range is established earlier than usual, the hydraulic pressures supplied to the friction engagement elements are switched at an early stage. Since a timing when an engagement instruction is output, the input torque of the automatic transmission 116 is adjusted on the basis of a torque-down instruction. In this adjustment, for example, the timing for igniting the engine 100 is different from a usual timing. Furthermore, after engagement of the friction engagement elements in the fourth-speed range has been completed, the period that elapses until it is determined that a gear shift to the fourth-speed range is completed can be minimized. After this determination has been made, a gear-shift instruction to the third-speed range is output. As a result, gear-shift responsive characteristics in the case of a multiple gear shift is improved.

In addition to a determination as to whether the gear shift is a multiple gear shift, calculation of a criterion period may be based on an acceleration request made by the driver. For example, calculation of a criterion period may be based on a temporal change rate in accelerator opening or a maximum value of accelerator opening. Thus, the criterion period can be calculated in more detail. As a result, the performance of control with higher precision is made possible.

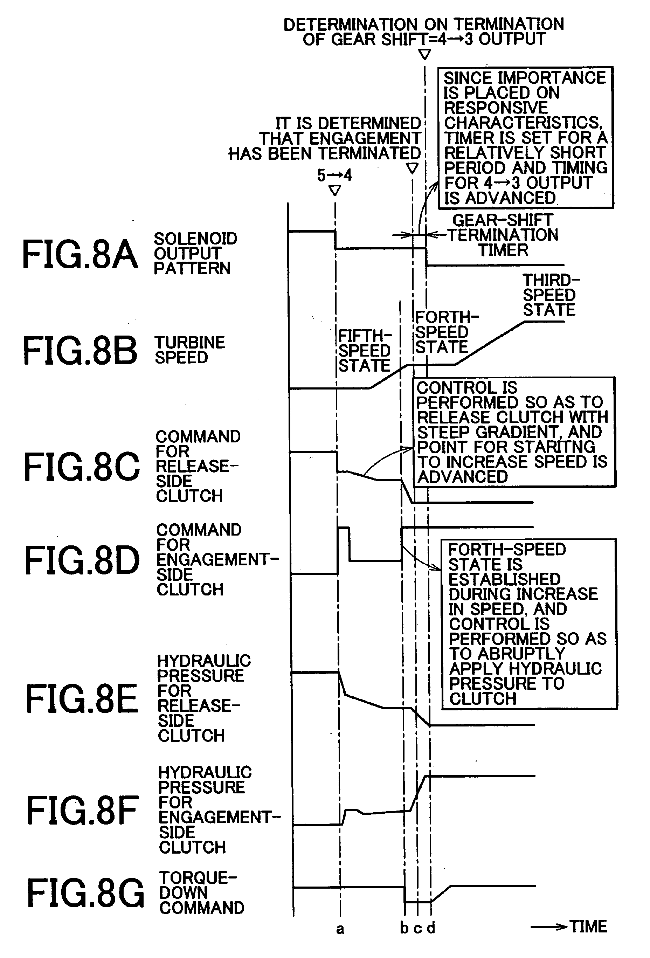

Figs. 8A to 8G are timing charts illustrating changes in characteristic values relating to a case where hydraulic pressures supplied to the friction engagement elements are controlled during a multiple gear shift in the automatic gear-shift system in accordance with the embodiment of the invention. Fig. 8A shows gear-shift instructions that are output by the ECT-ECU 106. In the case where a multiple gear-shift instruction from the fifth-speed range to the third-speed range has been detected, a gear-shift instruction from the fourth-speed range to the third-speed range is output after it is determined that a gear shift from the fifth-speed range to the fourth-speed range has been completed (i.e., after the criterion period ranging from a timing "c" to a timing "d" has elapsed). The period (d-c) is set shorter than a period in the case of a single-stage gear shift. Fig. 8B shows the input speed (turbine speed) of the automatic transmission.

Fig. 8C shows changes in the command value for the friction engagement elements to be released. In this case, for the purpose of advancing the releasing processings, the hydraulic-pressure command value for releasing the friction engagement elements more quickly than usual is output after the timing "a". Fig. 8D shows the command value for the friction engagement elements to be engaged. In this case, for the purpose of advancing establishment of the fourth-speed range, such a hydraulic-pressure command value as allows an engaging pressure to be supplied is output at a timing "b". Fig. 8E shows changes in the hydraulic pressure to be supplied on the basis of the command value shown in Fig. 8C. This hydraulic pressure drops until a timing between the timing "a" and the timing "b", on the basis of a temporal change rate that is higher than usual. Fig. 8F shows changes in the hydraulic pressure to be supplied on the basis of the command value shown in Fig. 8D. The hydraulic pressure continues to rise to the engaging pressure with a responsive delay with respect to the command shown in Fig. 8C from the timing "b". In this case, the temporal change rate in hydraulic pressure is higher than a change rate in the case of a non-multiple gear shift.

Fig. 8G shows changes in the output torque of the engine 100. If an instruction to engage the friction engagement elements is output at the timing "b", the torque drops on the basis of a predetermined adjustment amount. This torque adjustment lasts until a gear shift to the fourth-speed range is terminated (until the timing "d"). If it is then determined that the gear shift to the fourth-speed range has been terminated, the output torque gradually returns to its original level.

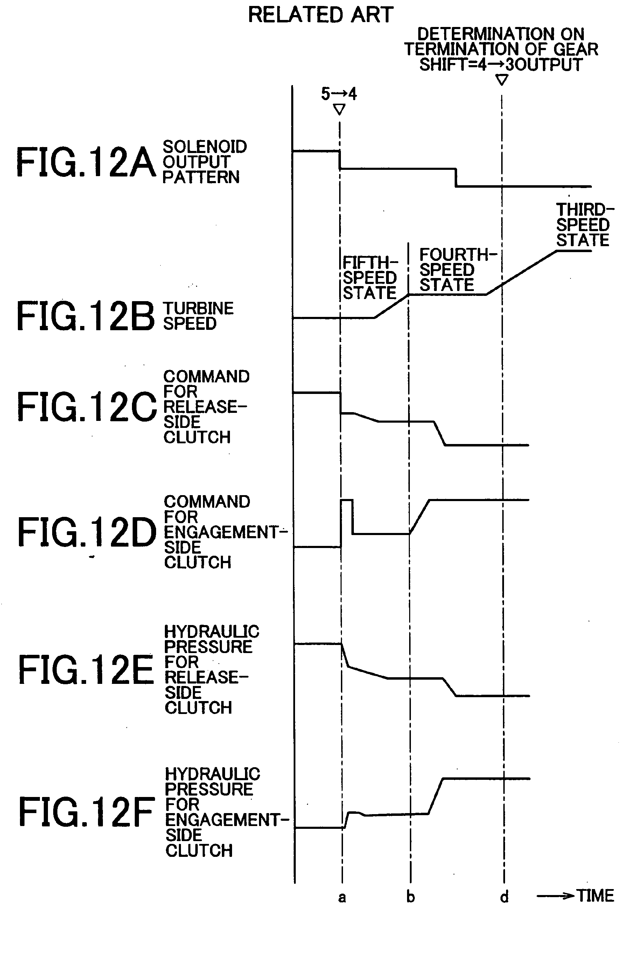

A difference between gear-shift responsive characteristics shown in Fig. 8 and gear-shift responsive characteristics shown in Fig. 12 will be described. Fig. 12 shows changes in characteristic values in a multiple gear shift (from the fifth-speed range to the third-speed range) that is made by a generally employed gear-shift control apparatus. In this case, the period from the timing "a" to the timing "d" (i.e., the period required for a gear shift from the fifth-speed range to the fourth-speed range) remains unchanged irrespective of whether a multiple gear shift or a single-stage gear shift is performed. Namely, the gear shift from the fifth-speed range to the third-speed range requires a period of 2×(d-a). On the other hand, the period of (d-a) shown in Fig. 8 is shorter than the period shown in Fig. 12 by a period corresponding to the contraction of a state of the fourth-speed range.

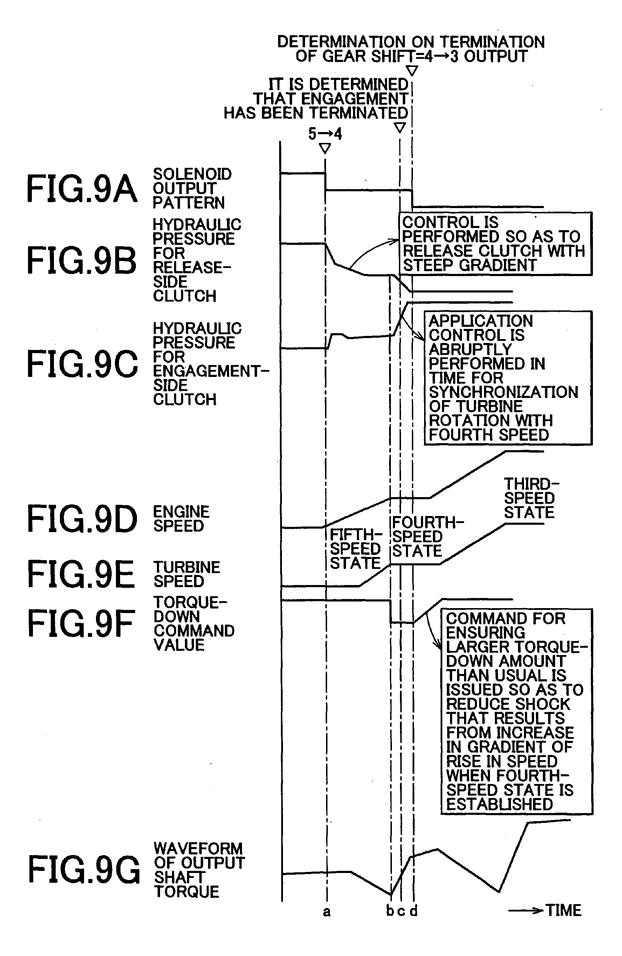

Fig. 9 shows changes in characteristic values relating to a case where the torque is adjusted during a multiple gear shift in the automatic gear-shift system in accordance with the embodiment of the invention. The contents of Figs. 9A, 9B, 9C, and 9E are identical with Figs. 8A, 8E, 8F, and 8B, and therefore will not be described below.

Fig. 9D shows changes in the speed of the engine 100. Fig. 9F shows changes in the torque-down command value output by the ECT-ECU 106. A torque-down command is output at the timing "b". This command continues to be output until the timing "d" when it is determined that the fourth-speed stage has been established. Fig. 9G shows the waveform of the output shaft torque of the automatic transmission 116. Due to the fact that the adjustment of torque is started at the timing "b", the output shaft torque from the timing "b" to the timing "d" fluctuates less dramatically than usual. As a result, a gear-shift shock does not occur.

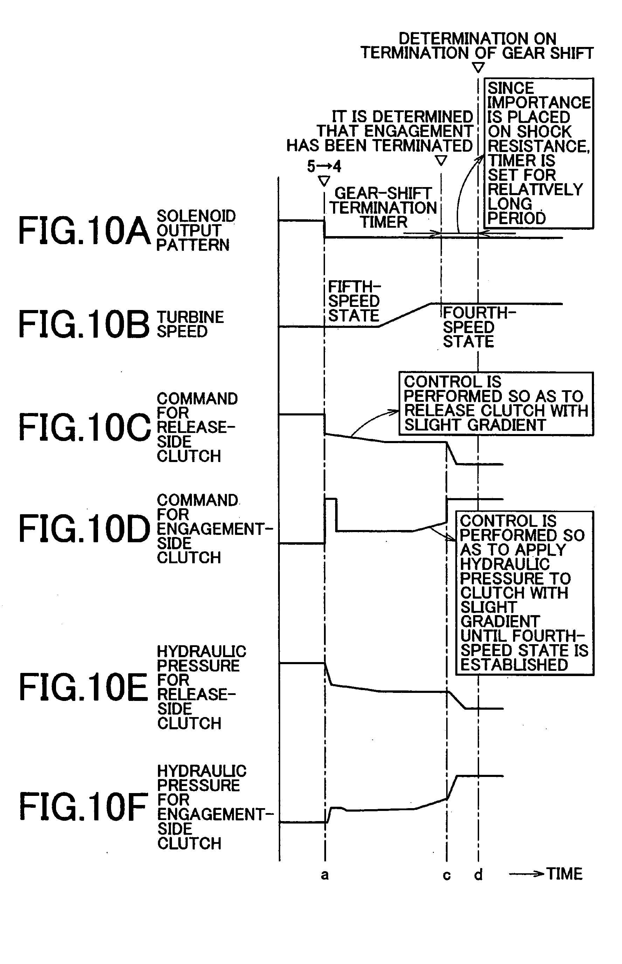

Fig. 10 shows changes in characteristic values relating to a case where the hydraulic pressures to be supplied to the friction engagement elements during a single-stage gear shift are controlled in the automatic gear-shift system in accordance with the embodiment of the invention. The contents of the characteristic values shown in Figs. 10A to 10F are identical with the contents of the characteristic values shown in Figs. 8A to 8F, and therefore will not be described below. It will now be described how changes in the characteristic values during a single-stage gear shift differ from those during a multiple gear shift.

Referring to Fig. 10C, the command value of hydraulic pressure is output while being changed gently, so that the friction engagement elements to be released do not cause a gear-shift shock. Referring to Fig. 10D, the command value of hydraulic pressure is output while being gently changed, so that the friction engagement elements to be engaged do not cause a shock. Referring to Fig. 10E, hydraulic pressure drops on the basis of such a temporal change rate in hydraulic pressure as does not cause a gear-shift shock, in accordance with Fig. 10C. Referring to Fig. 10F, hydraulic pressure rises in accordance with Fig. 10D. The criterion period indicated by a period (d-c) (a "gear-shift termination timer" in Fig. 10) is set longer than the criterion period in the case of a multiple gear shift.

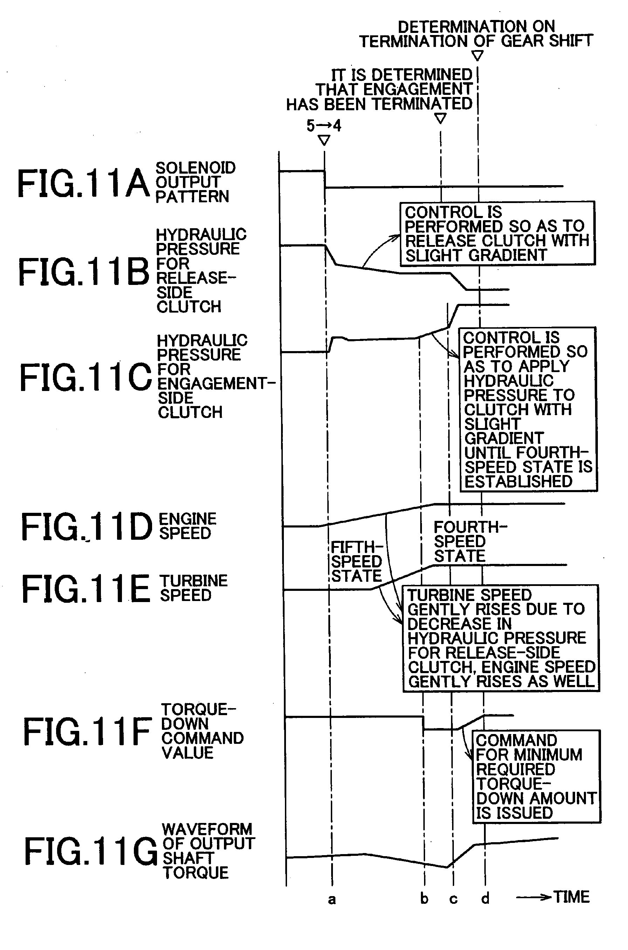

Fig. 11 shows changes in characteristic values relating to a case where torque is adjusted during a single-stage gear shift in the automatic gear-shift system in accordance with the embodiment of the invention. The contents of characteristic values shown in Figs. 11A to 11G are identical with those shown in Figs. 9A to 9G, and therefore will not be described below. It will now be described how changes in the characteristic values during a single-stage gear shift differ from those during a multiple gear shift.

Referring to Fig. 11F, such a torque-down command value as ensures a minimum required torque-down amount is output, in accordance with a single-stage gear shift. Namely, as shown in Fig. 11C, torque-down command value is output in response to a gentle rise in hydraulic pressure from the timing "b". Referring to Fig. 11G, output shaft torque drops until the timing "c" when the fourth-speed stage is established. Although torque thereafter increases, this increase in torque is gentle until the timing "d" when it is determined that a gear shift to the fourth speed range is completed. As a result, no gear-shift shock is caused.

As described above, by releasing the friction engagement elements on the basis of release processing conditions (e.g., a hydraulic-pressure temporal change rate for releasing the friction engagement elements), engaging the friction engagement elements on the basis of engagement processing conditions (i.e., a hydraulic-pressure temporal change rate for engaging the friction engagement elements), and outputting a subsequent gear-shift instruction on the basis of a criterion period, it becomes possible to adjust gear-shift responsive characteristics in response to information regarding the automatic transmission. Furthermore, by adjusting the output torque of a power source (engine) in response to information regarding the automatic transmission, the input torque of the automatic transmission is adjusted and the occurrence of a gear-shift shock is restrained. As a result, it is possible to provide a gear-shift control apparatus capable of adjusting gear-shift responsive characteristics in response to information regarding the automatic transmission and restraining the occurrence of a gear-shift shock.

In the illustrated embodiment, the controllers (e.g., ECT-ECU 106) are implemented with general-purpose processors. It will be appreciated by those skilled in the art that the controllers can be implemented using a single special-purpose integrated circuit (e.g., ASIC) having a main or central processor section for overall, system-level control, and separate sections dedicated to performing various different specific computations, functions and other processes under control of the central processor section. The controllers can be a plurality of separate dedicated or programmable integrated or other electronic circuits or devices (e.g., hardwired electronic or logic circuits such as discrete element circuits, or programmable logic devices such as PLDs, PLAs, PALs or the like). The controllers can be suitably programmed for use with a general-purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controllers. A distributed processing architecture can be used for maximum data/signal processing capability and speed.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

If oil temperature is equal to or higher than a predetermined temperature and if accelerator opening change rate is equal to or higher than a predetermined change rate upon detection of a downshift instruction (YES in S302), an ECT-ECU sets modes corresponding to conditions for determination period calculation processings (S400), hydraulic-pressure temporal change rate calculation processings (S500), and torque adjustment amount calculation processings (S600), respectively. By performing downshift (S310) on the basis of a determination period, a hydraulic-pressure temporal change rate, and a torque adjustment amount corresponding to a set mode, the ECT-ECU improves gear-shift responsive characteristics and restrains the occurrence of a gear-shift shock.

## Claims

1. A gear-shift control apparatus that controls an automatic transmission (116) installed in a vehicle, **characterized in that**
the gear-shift control apparatus includes detection means (104, 118, 110, 112, 114) for detecting information regarding the automatic transmission (116) and first condition calculation means (106) for calculating an engagement processing condition if the information satisfies a predetermined condition,
the engagement processing condition relates to a processing that is performed after a hydraulic-pressure command value for engaging a first friction engagement element is output on the basis of an instruction to the automatic transmission (116) and before a gear-shift stage based on the instruction is established, and
the gear-shift control apparatus further includes period calculation means (106) for calculating a criterion period from a timing when the gear-shift stage is established to a timing when it is determined that a gear shift has been completed if the information satisfies the predetermined condition, determination means (106) for determining that a processing based on the instruction has been completed if a predetermined reference period elapses after establishment of the gear-shift stage, and set means (106) for setting the criterion period as the reference period.

2. The gear-shift control apparatus according to claim 1, wherein
the engagement processing condition relates to a temporal change rate in a first hydraulic pressure that is supplied to the first friction engagement element so as to engage the first friction engagement element,
the detection means (104, 118, 110, 112, 114) includes means for detecting a gear-shift instruction to the automatic transmission (116), and
the first condition calculation means (106) includes means for calculating the temporal change rate in the first hydraulic pressure such that the temporal change rate becomes higher than a first preset change rate if the two or more gear-shift instructions are detected within the predetermined period.

3. The gear-shift control apparatus according to claim 1, wherein
the engagement processing condition relates to a temporal change rate in a first hydraulic pressure that is supplied to the first friction engagement element so as to engage the first friction engagement element, the detection means (104, 118, 110, 112, 114) includes means for detecting an input speed of the automatic transmission (116) and means for detecting a gear-shift instruction to the automatic transmission (116), and
the first condition calculation means (106) includes means for calculating the temporal change rate in the first hydraulic pressure such that the temporal change rate becomes higher than a first preset change rate if the input speed satisfies a predetermined condition with the two or more gear-shift instructions having been detected within the predetermined period.

4. The gear-shift control apparatus according to claim 1, wherein
the detection means (104, 118, 110, 112, 114) includes means for detecting a gear-shift instruction to the automatic transmission (116), and
the period calculation means (106) includes means for calculating the criterion period such that the criterion period becomes shorter than a preset reference period if the two or more gear-shift instructions are detected within the predetermined period.

5. The gear-shift control apparatus according to claim 1, wherein
the detection means (104, 118, 110, 112, 114) includes means for detecting a gear-shift instruction to the automatic transmission (116) and means for detecting an input speed of the automatic transmission (116), and
the period calculation means (106) includes means for calculating the criterion period such that the criterion period becomes shorter than a preset reference period if the input speed satisfies a predetermined condition with the two or more gear-shift instructions having been detected within the predetermined period.

6. The gear-shift control apparatus according to claim 1, wherein
the gear-shift control apparatus further includes second condition calculation means (106) for calculating a release processing condition if the information satisfies the predetermined condition, and
the release processing condition relates to a processing that is performed after an instruction to the automatic transmission (116) is output and before a second friction engagement element is released.

7. The gear-shift control apparatus according to claim 6, wherein
the engagement processing condition relates to a temporal change rate in a first hydraulic pressure that is supplied to the first friction engagement element so as to engage the first friction engagement element,
the release processing condition relates to a temporal change rate in a second hydraulic pressure that is supplied to the second friction engagement element so as to release the second friction engagement element,
the detection means (104, 118, 110, 112, 114) includes means for detecting a gear-shift instruction to the automatic transmission (116),
the first condition calculation means (106) includes means for calculating the temporal change rate in the first hydraulic pressure such that the temporal change rate becomes higher than a first preset change rate if the two or more gear-shift instructions are detected within the predetermined period, and
the second condition calculation means (106) includes means for calculating the temporal change rate in the second hydraulic pressure such that the temporal change rate becomes higher than a second preset change rate if the two or more gear-shift instructions are detected within the predetermined period.

8. A gear-shift control apparatus that controls an automatic transmission (116) installed in a vehicle, **characterized in that**
input torque of the automatic transmission (116) is controlled by torque control means of a power source (100) of the vehicle,
the gear-shift control apparatus includes detection means (104, 118, 110, 112, 114) for detecting information regarding the automatic transmission (116) and condition calculation means (106) for calculating an engagement processing condition if the information satisfies a predetermined condition,
the engagement processing condition relates to a processing that is performed after a hydraulic-pressure command value for engaging a friction engagement element is output on the basis of an instruction to the automatic transmission (116) and before a gear-shift stage based on the instruction is established, and
the gear-shift control apparatus further includes first output means (106) for outputting a first instruction for adjusting the input torque on the basis of a first adjustment amount calculated in advance if the information satisfies the predetermined condition.

9. The gear-shift control apparatus according to claim 8, wherein
the engagement processing condition relates to a temporal change rate in a hydraulic pressure supplied to the friction engagement element,
the detection means (104, 118, 110, 112, 114) includes means for detecting a gear-shift instruction to the automatic transmission (116),
the condition calculation means (106)includes means for calculating the temporal change rate in the hydraulic pressure such that the temporal change rate becomes higher than a preset change rate if the two or more gear-shift instructions are detected within the predetermined period, and
the first output means (106) includes means for outputting the first instruction if the two or more gear-shift instructions are detected within the predetermined period.

10. The gear-shift control apparatus according to claim 8, wherein
the engagement processing condition relates to a temporal change rate in a hydraulic pressure supplied to the friction engagement element,
the detection means (104, 118, 110, 112, 114) includes means for detecting a gear-shift instruction to the automatic transmission (116) and means for detecting an input speed of the automatic transmission (116),
the condition calculation means (106) includes means for calculating the temporal change rate in the hydraulic pressure such that the temporal change rate becomes higher than a preset change rate if the input speed satisfies a predetermined condition with the two or more gear-shift instructions having been detected within the predetermined period, and
the first output means (106) includes means for outputting the first instruction if the input speed satisfies the predetermined condition with the two or more gear-shift instructions having been detected within the predetermined period.

11. The gear-shift control apparatus according to claim 8, wherein
the engagement processing condition relates to a temporal change rate in a hydraulic pressure supplied to the friction engagement element, and
the gear-shift control apparatus further includes acceleration request detection means (104) for detecting an acceleration request made by a driver of the vehicle, second output means (106) for outputting a second instruction for adjusting the input torque on the basis of a second adjustment amount calculated in advance if the acceleration request satisfies a predetermined condition, and determination means (106) for determining whether to adjust the input torque on the basis of one of the first and second adjustment amounts if the acceleration request satisfies the predetermined condition.

12. The gear-shift control apparatus according to claim 11, wherein
the second adjustment amount is larger than the first adjustment amount,
the detection means (104, 118, 110, 112, 114) includes means for detecting a gear-shift instruction to the automatic transmission (116) and means for detecting an input speed of the automatic transmission (116),
the acceleration request detection means (104, 118, 110, 112, 114) includes means for detecting a throttle opening of the vehicle, and
the determination means (106) includes means for determining that the input torque is to be adjusted on the basis of the second adjustment amount if the input speed satisfies the predetermined condition with the throttle opening being larger than a predetermined opening and with the two or more gear-shift instructions having been detected within the predetermined period.

13. A gear-shift control method for controlling an automatic transmission (116) installed in a vehicle, **characterized in that**
the gear-shift control method includes a detection step of detecting information regarding the automatic transmission (116) and a first condition calculation step of calculating an engagement processing condition if the information satisfies a predetermined condition,
the engagement processing condition relates to a processing that is performed after a hydraulic-pressure command value for engaging a first friction engagement element is output on the basis of an instruction to the automatic transmission (116) and before a gear-shift stage based on the instruction is established, and
the gear-shift control method further includes a period calculation step of calculating a criterion period from a timing when the gear-shift stage is established to a timing when it is determined that a gear shift has been completed if the information satisfies the predetermined condition, a determination step of determining that a processing based on the instruction has been completed if a predetermined reference period elapses after establishment of the gear-shift stage, and a set step of setting the criterion period as the reference period.

14. The gear-shift control method according to claim 13, wherein
the engagement processing condition relates to a temporal change rate in a first hydraulic pressure that is supplied to the first friction engagement element so as to engage the first friction engagement element,
the detection step includes a step of detecting a gear-shift instruction to the automatic transmission (116), and the first condition calculation step includes a step of calculating a temporal change rate in the first hydraulic pressure such that the temporal change rate becomes higher than a first preset change rate if the two or more gear-shift instructions are detected within the predetermined period.

15. The gear-shift control method according to claim 13, wherein
the engagement processing condition relates to the temporal change rate in a first hydraulic pressure that is supplied to the first friction engagement element so as to engage the first friction engagement element,
the detection step includes a step of detecting an input speed of the automatic transmission (116) and a step of detecting a gear-shift instruction to the automatic transmission (116), and
the first condition calculation step includes the step of calculating a temporal change rate in the first hydraulic pressure such that the temporal change rate becomes higher than a first preset change rate if the input speed satisfies the predetermined condition with the two or more gear-shift instructions having been detected within the predetermined period.

16. The gear-shift control method according to claim 13, wherein
the detection step includes a step of detecting a gear-shift instruction to the automatic transmission (116), and
the period calculation step includes a step of calculating the criterion period such that the criterion period becomes shorter than a preset reference period if the two or more gear-shift instructions are detected within the predetermined period.

17. The gear-shift control method according to claim 13, wherein
the detection step includes a step of detecting a gear-shift instruction to the automatic transmission (116) and a step of detecting an input speed of the automatic transmission (116), and
the period calculation step includes a step of calculating the criterion period such that the criterion period becomes shorter than a preset reference period if the input speed satisfies a predetermined condition with the two or more gear-shift instructions having been detected within the predetermined period.

18. The gear-shift control method according to claim 13, wherein
the gear-shift control method further includes a second condition calculation step of calculating a release processing condition if the information satisfies the predetermined condition, and
the release processing condition relates to a processing that is performed after an instruction is output to the automatic transmission (116) and before the second friction engagement element is released.

19. The gear-shift control method according to claim 18, wherein
the engagement processing condition relates to a temporal change rate in a first hydraulic pressure that is supplied to the first friction engagement element so as to engage the first friction engagement element,
the release processing condition relates to a temporal change rate in a second hydraulic pressure that is supplied to the second friction engagement element so as to release the second friction engagement element,
the detection step includes a step of detecting a gear-shift instruction to the automatic transmission (116),
the first condition calculation step includes a step of calculating the temporal change rate in the first hydraulic pressure such that the temporal change rate becomes higher than a first preset change rate if the two or more gear-shift instructions are detected within the predetermined period, and
the second condition calculation step includes a step of calculating the temporal change rate in the second hydraulic pressure such that the temporal change rate becomes higher than a second preset change rate if the two or more gear-shift instructions are detected within the predetermined period.

20. A gear-shift control method for controlling an automatic transmission (116) installed in a vehicle, **characterized in that**
input torque of the automatic transmission (116) is controlled by the torque control means of a power source (100) of the vehicle,
the gear-shift control method includes a detection step of detecting information regarding the automatic transmission (116) and a condition calculation step of calculating an engagement processing condition if the information satisfies a predetermined condition,
the engagement processing condition relates to a processing that is performed after a hydraulic-pressure command value for engaging a friction engagement element on the basis of an instruction to the automatic transmission (116) is output and before a gear-shift stage based on the instruction is established, and
the gear-shift control method further includes a first output step of outputting a first instruction for adjusting the input torque on the basis of a first adjustment amount calculated in advance if the information satisfies the predetermined condition.

21. The gear-shift control method according to claim 20, wherein
the engagement processing condition relates to the temporal change rate in a hydraulic pressure supplied to the friction engagement element,
the detection step includes a step of detecting a gear-shift instruction to the automatic transmission (116),
the condition calculation step includes a step of calculating a temporal change rate in the hydraulic pressure such that the temporal change rate becomes higher than a preset change rate if the two or more gear-shift instructions are detected within the predetermined period, and
the first output step includes a step of outputting the first instruction if the two or more gear-shift instructions are detected within the predetermined period.

22. The gear-shift control method according to claim 20, wherein
the engagement processing condition relates to a temporal change rate in a hydraulic pressure supplied to the friction engagement element,
the detection step includes a step of detecting a gear-shift instruction to the automatic transmission (116) and-a step of detecting an input speed of the automatic transmission (116),
the condition calculation step includes a step of calculating the temporal change rate in the hydraulic pressure such that the temporal change rate becomes higher than a preset change rate if the input speed satisfies a predetermined condition with the two or more gear-shift instructions having been detected within the predetermined period, and
the first output step includes a step of outputting the first instruction if the input speed satisfies a predetermined condition with the two or more gear-shift instructions having been detected within the predetermined period.

23. The gear-shift control method according to claim 20, wherein
the engagement processing condition relates to a temporal change rate in a hydraulic pressure supplied to the friction engagement element, and
the gear-shift control method further includes an acceleration request detection step of detecting an acceleration request made by a driver of the vehicle, a second output step of outputting a second instruction for adjusting the input torque on the basis of a second adjustment amount calculated in advance if the acceleration request satisfies a predetermined condition, and a determination step of determining whether to adjust the input torque on the basis of one of the first and second adjustment amounts if the acceleration request satisfies a predetermined condition.

24. The gear-shift control method according to claim 23, wherein
the second adjustment amount is larger than the first adjustment amount, and
the detection step includes a step of detecting a gear-shift instruction to the automatic transmission (116) and a step of detecting an input speed of the automatic transmission (116),
the acceleration request detection step includes a step of detecting a throttle opening of the vehicle, and
the determination step includes a step of determining that the input torque is to be adjusted on the basis of the second adjustment amount if the input speed satisfies the predetermined condition in the case where the throttle opening is larger than a predetermined opening and where the two or more gear-shift instructions are detected within the predetermined period.
